# EUROPEAN PATENT APPLICATION

(11) **EP 1 429 068 A2**
(43) Date of publication of application: **16.06.2004**
(21) Application number: 03028541.5
(22) Date of filing: 11.12.2003
(51) Int. Cl.: F16N 7/00, F16N 7/02, F16N 7/36

(54) **Lubrication system for reduction unit, in particular epicycloidal speed reducer**

(30) Priority: 13.12.2002 IT BO20020787
(71) Applicant: Tecnoingranaggi Riduttori S.r.l., 40017 S. Giovanni in Persiceto (Bologna) (IT)
(72) Inventor: Bergonzoni, Giuliano, 40012 Calderara di Reno (Bologna) (IT)
(74) Representative: Dall'Olio, Giancarlo

(57) **Abstract**

The lubrication system includes a tank (3) external to the casing (1) that contains the gearings (2) of the reduction unit (R). Through a duct (4), the oil (L) moved by the gearings (2) circulates from the casing (1) to the tank (3), and then returns into the casing (1). The tank (3) communicates with the outside by a hole (30) made in its top, intended to allow the venting of any overpressures existing into the reduction unit (R). The system prevents overheating of the oil and the means constituting the reduction unit, even when this latter is subject to heavy duty.

## Description

The invention relates to the lubrication of epicycloidal reduction units, in particular small-sized ones associated to electric motors, of the "brushless" or of the "step" type, or direct current type, etc.

As known, such ratiomotor units are frequently applied in the construction of automatic machines, and in general, where it is necessary to actuate mechanisms with highly accurate movements.

It is therefore necessary that the reduction unit be provided with features suitable for those of the motors they are associated to, and therefore they must be constructed with accurate processes and very strict tolerances, so as to obtain accurate and almost clearance-free couplings.

The lubrication of the above motors is obtained by pouring a certain amount of lubricating oil (about 30% of the free volume) into the casing that contains the gearings; the motion of the latter causes the oil shaking, which is projected into all directions, thus reaching the means to be lubricated.

Due to the very limited sizes of the reduction units, the thermal exchange surface with the exterior is necessarily restricted; moreover, both the free volume inside the reduction and consequently the lubricant that can be poured therein are limited as well.

As a consequence, when the reduction units are subject to a very intensive use, overheating occurs that produces a series of disadvantages, such as increase of the inside temperature, abnormal power consumption, loss of the lubricant viscosity characteristics and therefore early wear of the gears, as well as their seizure, sometimes.

Object of the present invention is that of proposing a lubrication system for epicycloidal reduction units which should allow maintaining the operating temperature of the latter within fixed values, irrespective of the use conditions.

Another object of the invention is that of proposing a lubrication system which should be easily applicable to normal-production reduction units without requiring changes to the moving parts and without altering any functional feature.

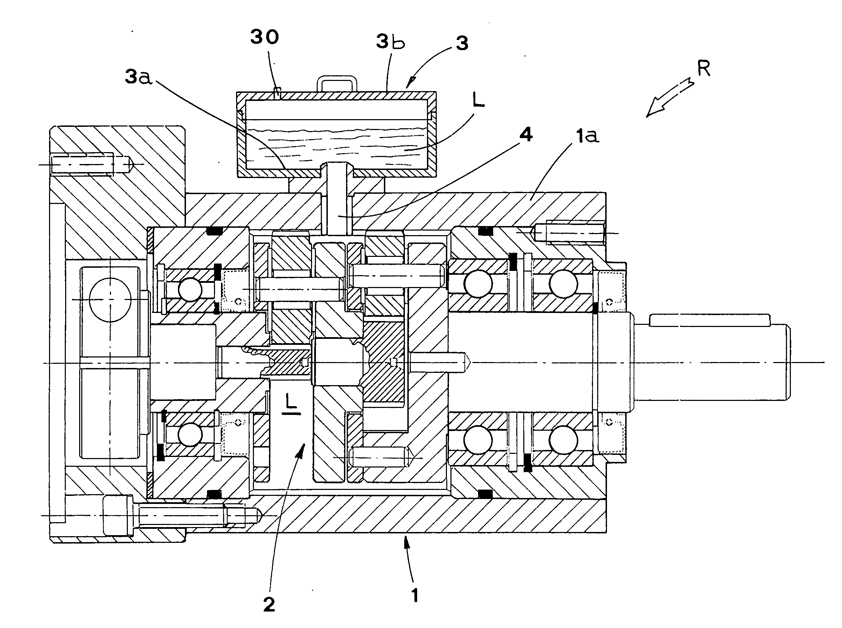

The proposed system will appear more clearly from the following description, according with what reported in the claims and with reference to the attached drawing table, which shows a longitudinal section of an epicycloidal reduction unit provided with the lubrication system under discussion.

With reference to said figure, reference R globally denotes an epicycloidal reduction unit, provided with the lubrication system object of the present invention.

The reduction unit R is of the known type, for example a two-stage one, and it is provided for being coupled with electric motors, for example of the "brushless" or "step" type, or of direct current operated type, not shown.

The gearings 2 of the reduction unit R are housed into a sealed casing 1, also adapted for containing lubricating oil L for lubricating the same gearings 2, as detailed hereinafter.

The lubrication system under discussion comprises a tank 3, arranged outside the casing 1, in a position overhanging the latter with the reduction unit R set up for work.

The tank 3 is provided with a removable cover 3b, wherein there is made at least one calibrated hole 30, adapted for making the same tank 3 communicating with the exterior, which also communicates with the interior of the casing 1 by a duct 4 extending between the relevant bottom 3a and the top wall 1a of the casing 1.

The introduction of lubricating oil L into the reduction unit R is done through the tank 3, after the removal of the related cover 3b; the quantity of oil introduced is such as to fill the casing 1 fully and the same tank 3 partly.

The operation of the proposed lubrication system is very simple and totally spontaneous; the lubricating oil L is moved by the gearings 2 and made to circulate between the casing 1 and the tank 3, and vice versa, through the duct 4, with the speed function of the speed of rotation of the same gearings 2.

During said circulation, the oil yields part of its heat to the walls of the tank 3, which, being outside the casing 1, remains cooler than the latter.

The larger quantity of oil L in circulation compared to the reduction units of the known type, along with the extended thermal exchange surface, given by the walls of the same tank 3, ensures a good oil cooling, sufficient to keep the operating temperatures of the oil and of the reduction unit means within values that are largely lower than the overheating ones, also in case of especially heavy duty.

Any overpressures generated into the casing 1 are vented outside through the calibrated venting hole 30.

According to a first construction variant, not shown, two ducts 4 are provided, suitably arranged so that one is for delivery, from the casing 1 to the tank 3, and the other is for return, when the gearings 2 are actuated in one direction.

By rotating the gearings 2 in the opposed direction, there occurs an exchange of function between the two ducts 4, so that the delivery one becomes for return and vice versa.

By said first variant it is possible to increase the circulation speed of the lubricating oil L from the casing 1 to the tank 3 and vice versa, thus increasing the extent of the cooling.

A second variant, also not shown, provides for the tank 3 to be finned, for a further extension of the thermal exchange surface.

The proposed solution is as simple as effective, as the tests performed have unequivocally confirmed.

The system can be applied to the reduction units already normally produced without any other change than a hole into the casing, thus with the certainty of changing no functional feature at all.

If deemed advantageous, it is also possible to modify already produced reduction units to provide them with the lubrication system described.

The additional cost of the system for the production of the reduction units is minimal, and if compared to the advantages obtained, almost insignificant.

## Claims

1. Lubrication system for reduction unit, in particular epicycloidal speed reducer, in which the relater gearings (2) are housed within a tight casing (1), provided for containing a lubricating oil, the said system being **characterized in that** it includes:
a tank (3) disposed outside the said casing (1), in a position overhanging this latter;
at least one duct (4) which sets said tank (3) into communication with the inside of said casing (1);
means (3b) for allowing introduction of a predetermined quantity of lubricating oil (L) into the tank (3) such as to fill completely the said casing (1) through said duct (4) for lubrication of the said gearings (2), as well as for filling partially the above mentioned tank (3), the said oil being forced to circulate from the tank (3) to the casing (1) and vice-versa, through the same duct (4), as a consequence of the rotation of the above mentioned gearings (2); at least one calibrated hole (30) made at the top of said tank (3), for setting the inside of the tank in communication with the outside environment, for venting possible overpressures occurring inside the said casing (1).

2. Lubrication system in accordance with claim 1, **characterized in that** the said duct (4) extends from the bottom (3a) of the said tank (3) and the top wall of the above mentioned casing (1).

3. Lubrication system in accordance with claim 1, **characterized in that** the said means for allowing introduction of oil into the said tank (3) include a cover (3b).

4. Lubrication system in accordance with claim 1, **characterized in that** the said communication between said tank (3) and casing (1) is obtained by means of two ducts (4), one of which is for delivery, from the casing (1) to the tank (3), and the other is for return, for the reverse path.

5. Lubrication system in accordance with claim 3, **characterized in that** the said ducts (4) extends from the bottom (3a) of the said tank (3) and the upper wall of the above mentioned casing (1).

6. Lubrication system in accordance with claim 1, **characterized in that** the said tank (3) is provided with fins.
